# EUROPEAN PATENT APPLICATION

(11) **EP 4 152 578 A1**
(43) Date of publication of application: **22.03.2023**
(21) Application number: 21861075.6
(22) Date of filing: 26.07.2021
(51) Int. Cl.: H02K 15/14, B22C 9/10, B22C 9/24, B22D 25/02, H02K 1/32, H02K 5/06, H02K 5/20, H02K 9/19

(54) **METHOD OF MANUFACTURING COOLING ELEMENT FOR ROTATING ELECTRICAL MACHINE**

(30) Priority: 28.08.2020 JP 2020144844
(71) Applicant: AISIN CORPORATION, Kariya-shi, Aichi 448-8650 (JP); Art Metal Mfg. Co., Ltd., Ueda-shi, Nagano 386-0027 (JP)
(72) Inventor: IKEDA, Masaki, Kariya-shi, Aichi 448-8650 (JP); OKAZAWA, Toshihiko, Kariya-shi, Aichi 448-8650 (JP); MURAKAMI, Satoshi, Kariya-shi, Aichi 448-8650 (JP)
(74) Representative: Kramer Barske Schmidtchen Patentanwälte PartG mbB
(86) International application number: PCT/JP2021/027539
(87) International publication number: WO 2022/044647

(57) **Abstract**

Disclosed is a manufacturing method of a cooling member to be used for a rotary electric machine. The manufacturing method includes a preparation step for preparing a plurality of annular collapsible cores having radial projections and recesses, a stacking step for concentrically stacking the plurality of collapsible cores along a direction of extension of a rotational axis of the rotary electric machine, a casting step for pouring a material of the cooling member into a die with the plurality of collapsible cores stacked in the die so that the material covers outer peripheral surfaces and inner peripheral surfaces of the plurality of collapsible cores, and a removal step for removing the plurality of collapsible cores after the casting step.

## Description

### TECHNICAL FIELD

The present disclosure relates to a manufacturing method of a cooling member for a rotary electric machine.

### BACKGROUND ART

There is known a channel structure in which radially columnar projections are provided between a radially inner cylindrical wall and a radially outer cylindrical wall.

### Related Art Documents

### Patent Documents

Patent Document 1: German Unexamined Patent Application Publication No. 102009047215 (DE 102009047215 A)

### SUMMARY OF THE INVENTION

### Problem to be Solved by the Invention

In the related art discussed above, the channel structure having the plurality of columnar projections is advantageous in that the surface area capable of heat exchange can be increased efficiently, but there is a problem of a strong manufacturing constraint on the formation of the columnar projections. For example, when using collapsible cores, the collapsible cores are molded to have columnar cavities to form the columnar projections. In a case of a type of collapsible cores to be molded by applying pressure, however, it is difficult to set such columnar cavities at a plurality of portions in an axial direction on one piece of the collapsible cores.

Accordingly, it is an object of the present disclosure to enable manufacture of a cooling member for a rotary electric machine that has a relatively large surface area capable of heat exchange using collapsible cores.

### Means for Solving the Problem

One aspect of the present disclosure provides a manufacturing method of a cooling member to be used for a rotary electric machine. The method includes: a preparation step for preparing a plurality of annular collapsible cores having radial projections and recesses; a stacking step for concentrically stacking the plurality of collapsible cores along a direction of extension of a rotational axis of the rotary electric machine; a casting step for pouring a material of the cooling member into a die with the plurality of collapsible cores stacked in the die so that the material covers outer peripheral surfaces and inner peripheral surfaces of the plurality of collapsible cores; and a removal step for removing the plurality of collapsible cores after the casting step.

### Effects of the Invention

According to the present disclosure, it is possible to manufacture the cooling member for the rotary electric machine that has a relatively large surface area capable of heat exchange using the collapsible cores.

### BRIEF DESCRIPTION OF THE DRAWINGS

[FIG. 1] FIG. 1 is a front view schematically illustrating the appearance of a motor according to an embodiment.
[FIG. 2] FIG. 2 is a side view (a plan view as seen in an axial direction) schematically illustrating a part of the motor.
[FIG. 3] FIG. 3 is a sectional view schematically illustrating a part of the motor taken along a plane that passes through the central axis of the motor.
[FIG. 4] FIG. 4 is a perspective view illustrating a core for a cooling water passage alone.
[FIG. 5] FIG. 5 is an enlarged view of a portion Q1 of the core of FIG. 4.
[FIG. 6] FIG. 6 is a perspective view of a part of a first collapsible core alone.
[FIG. 7] FIG. 7 is a perspective view of a part of a second collapsible core alone.
[FIG. 8A] FIG. 8A is a sectional view taken along a line A-A of FIG. 5.
[FIG. 8B] FIG. 8B is a sectional view taken along a line B-B of FIG. 5.
[FIG. 8C] FIG. 8C is a sectional view taken along a line C-C of FIG. 5.
[FIG. 9] FIG. 9 is a schematic flowchart illustrating the flow of a manufacturing method of a stator.
[FIG. 10A] FIG. 10A schematically illustrates a state in which a masking die is attached.
[FIG. 10B] FIG. 10B is a schematic sectional view illustrating the state in which the masking die is attached.
[FIG. 10C] FIG. 10C illustrates a method for joining a support case and a stator core.
[FIG. 10D] FIG. 10D is a sectional view schematically illustrating a state in which cores etc. are set in a casting die.
[FIG. 11] FIG. 11 illustrates a modification (Part 1) in which parts of four second collapsible cores disposed to adjoin each other in the axial direction are schematically shown in plan view.
[FIG. 12] FIG. 12 illustrates a modification (Part 2) in which parts of four second collapsible cores disposed to adjoin each other in the axial direction are schematically shown in plan view.
[FIG. 13] FIG. 13 illustrates a modification (Part 3) in which parts of four second collapsible cores disposed to adjoin each other in the axial direction are schematically shown in plan view.

### MODES FOR CARRYING OUT THE INVENTION

Embodiments will be described in detail below with reference to the accompanying drawings.

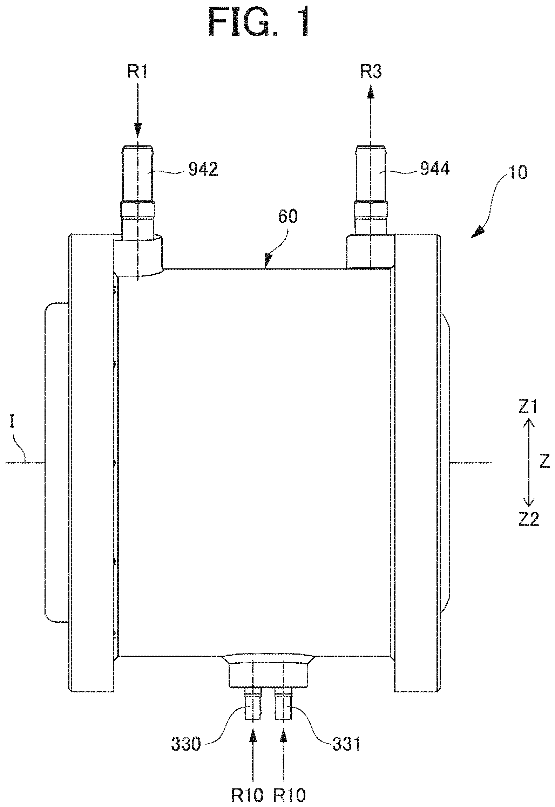

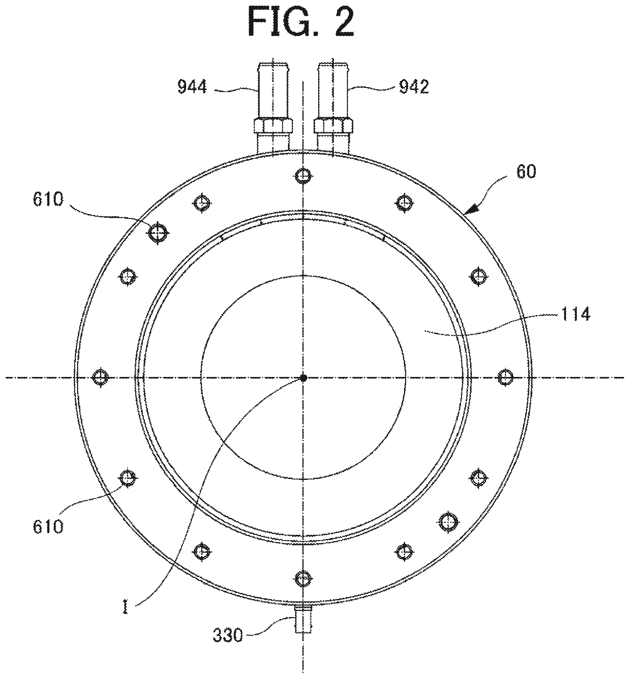

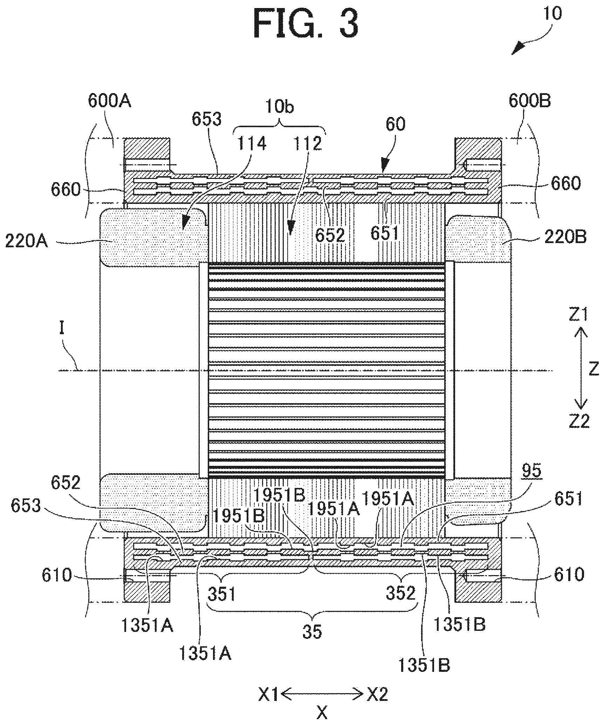

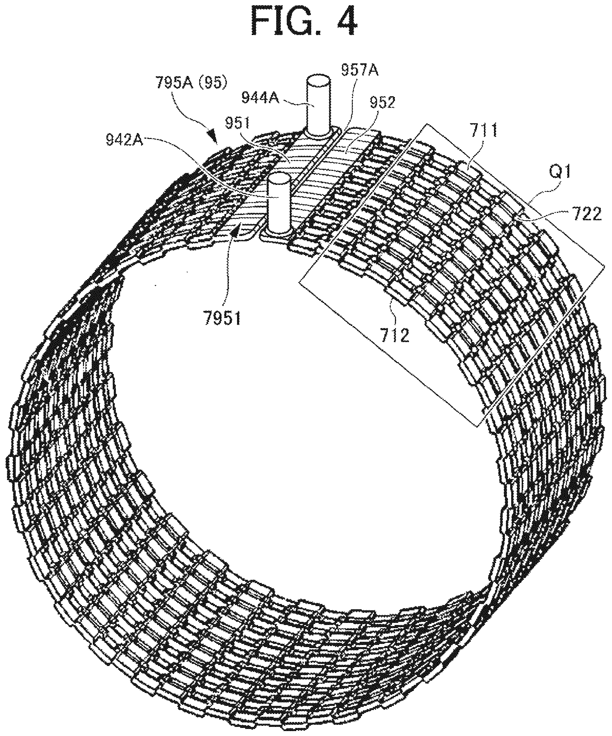

FIG. 1 is a front view schematically illustrating the appearance of a motor 10 according to the present embodiment. FIG. 2 is a side view (a plan view as seen in an axial direction) schematically illustrating a part of the motor 10. FIG. 3 is a sectional view schematically illustrating a part of the motor 10 taken along a plane that passes through a central axis I (rotational axis) of the motor 10. FIG. 4 is a perspective view illustrating a core 795A for a cooling water passage 95 alone. In FIGS. 1 to 3, a rotor of the motor 10 is not illustrated, and a stator coil 114 etc. are illustrated significantly schematically.

In the following, a radial direction is based on the central axis I of the motor 10 (= the central axis of a stator core 112) unless otherwise specified. In the following description, an up-down direction represents an up-down direction with the motor 10 mounted such that the central axis I is substantially parallel to a horizontal direction. FIG. 1 etc. illustrate a Z direction corresponding to the up-down direction and an X direction corresponding to the axial direction. In this case, the Z direction is orthogonal to the central axis I, with a Z1 side corresponding to an upper side and with a Z2 side corresponding to a lower side.

The motor 10 includes the rotor (not illustrated) and a stator 10b. The stator 10b includes the stator core 112 and the stator coil 114. The stator coil 114 includes coil ends 220A and 220B at both ends in the axial direction.

The motor 10 also includes a support case 60.

As illustrated in FIGS. 1, 2, etc., the support case 60 is in a cylindrical form, and can function as a case for the motor 10. The support case 60 is formed to open on both sides in the axial direction (formed not to substantially overlap the stator core 112 as viewed in the axial direction), for example. The support case 60 is coupled to different case members 600A and 600B (schematically illustrated by the long dashed short dashed lines in FIG. 3) on both sides in the axial direction. The case member 600A or 600B on one end side in the axial direction may rotatably support the rotor (not illustrated), although not illustrated in FIG. 3. FIGS. 2 and 3 illustrate holes 610 for bolt coupling to the different case members 600A and 600B. In this manner, the support case 60 may be coupled to the different case members 600A and 600B such that end surfaces of the support case 60 in the axial direction abut, in the axial direction, against end surfaces of the different case members 600A and 600B in the axial direction, respectively. The holes 610 for bolt coupling may be in the form of through holes that penetrate in the axial direction, or may be in the form of non-through holes.

The support case 60 is made of a material containing aluminum as a main component. For example, the support case 60 is preferably made of an aluminum alloy with a high corrosion resistance, in order to form the cooling water passage 95 through which cooling water passes as discussed later. Any aluminum alloy such as an Al-Si alloy, an Al-Mg alloy, and an Al-Mg-Si alloy may be used.

The support case 60 is structured to have a hollow portion (cavity) that forms a case oil passage 35 and the cooling water passage 95 (see FIG. 3) as discussed later. The support case 60 having such a hollow portion is a single-piece member, and may be formed by casting using a core (insertion piece) (see the core 795A of FIG. 4).

While FIG. 4 schematically illustrates the core 795A for the cooling water passage 95, a core for the case oil passage 35 is also prepared. The core 795A illustrated in FIG. 4 includes a cylindrical portion 7951 for forming the cooling water passage 95. The cylindrical portion 7951 includes a plurality of projecting portions 711, 712, and 722 for forming projecting and receding portions 1951A and 1951B (see FIG. 3) discussed later. The core 795A includes a groove portion 957A in the axial direction (separating portion in a circumferential direction). The groove portion 957A in the axial direction forms a partition wall (not illustrated) for blocking, in the axial direction, the continuity of the cooling water passage 95 in the circumferential direction in the top region of the support case 60. The groove portion 957A is formed to penetrate in the radial direction. The core 795A has circular column portions 942A and 944A for forming an inlet water passage 942 and an outlet water passage 944.

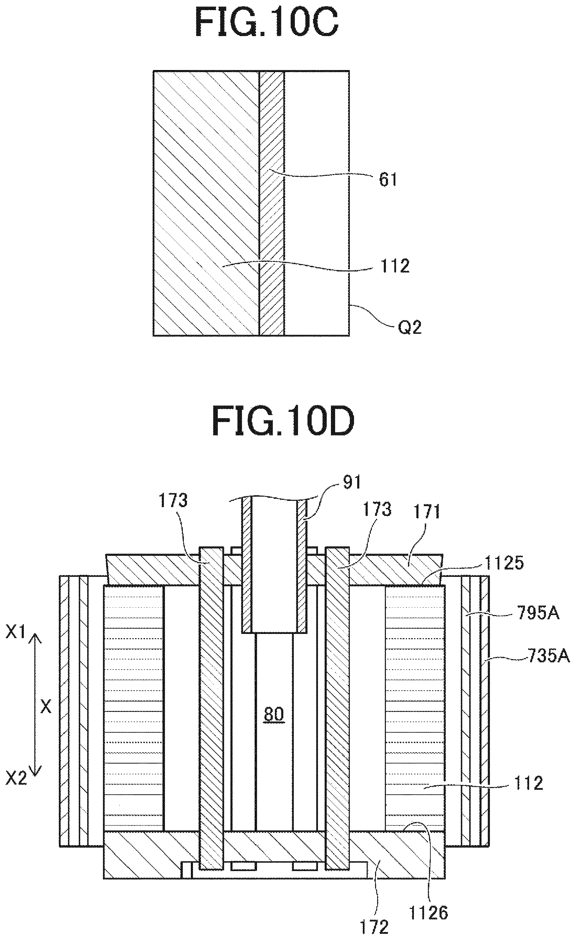

The support case 60 can be formed (cast) by setting two such cores (see cores 735A and 795A of FIG. 10D) in a die (not illustrated) such that the core for the cooling water passage 95 is disposed via a gap in the radial direction on the radially inner side of the core for the case oil passage 35 and injecting a molten metal material (the material of the support case 60; e.g., an aluminum alloy) into the die. In this case, the cores may be collapsible salt cores, for example, and are removed by dissolving salt by injecting water into core portions of a cast product taken out of the die. As a result, it is possible to form the support case 60 in which: a portion of the core for the case oil passage 35 forms a space (a space such as the case oil passage 35); a portion of the core for the cooling water passage 95 forms a space (a space such as the cooling water passage 95); a gap (an annular gap that extends in the axial direction over the substantially entire length of the support case 60 in the axial direction) between the core for the case oil passage 35 and the core for the cooling water passage 95 in the radial direction forms a boundary wall surface portion 652 (see FIG. 3); a gap (an annular gap that extends in the axial direction over the substantially entire length of the support case 60 in the axial direction) between the outer peripheral surface of the die and the radially outer surface of the core for the case oil passage 35 forms a radially outer wall surface portion 653 (see FIG. 3); a gap (an annular gap that extends in the axial direction over the substantially entire length of the support case 60 in the axial direction) between the inner peripheral surface of the die and the radially inner surface of the core for the cooling water passage 95 forms a radially inner wall surface portion 651 (see FIG. 3); and gaps (annular gaps) between the die and both end surfaces of the cores in the axial direction form both end wall portions 660 (see FIG. 3).

The support case 60 holds the stator core 112 on the radially inner side in contact with the stator core 112 in the radial direction. That is, the support case 60 holds the stator core 112 so as to cover the radially outer surface of the stator core 112 without a gap. In this manner, the support case 60 supports the stator 10b, including the stator core 112, in a non-rotatable manner.

The support case 60 and the stator core 112 are integrated with each other through joining, rather than fastening using bolts. That is, the radially inner surface of the support case 60 is joined to the radially outer surface of the stator core 112. The method for joining the support case 60 and the stator core 112 will be discussed later.

The support case 60 preferably holds the stator core 112 such that the radially inner surface of the support case 60 contacts (makes surface contact with) the substantially entire radially outer surface of the stator core 112. In this case, the entire stator core 112 can be cooled efficiently by cooling water that passes through the cooling water passage 95 in the support case 60. In the present embodiment, for example, the support case 60 extends over the entire length of the stator core 112 in the X direction, and the inner peripheral surface of the support case 60 contacts the substantially entire outer peripheral surface of the stator core 112, as illustrated in FIG. 3. The concept "substantially entire" about the outer peripheral surface of the stator core 112 may allow a portion such as a welding groove (not illustrated) of the stator core 112 (a portion at which the outer peripheral surface of the stator core 112 and the inner peripheral surface of the support case 60 may be spaced from each other in the radial direction).

The support case 60 includes the case oil passage 35 and the cooling water passage 95 formed therein. In this case, the stator core 112, the cooling water passage 95, and the case oil passage 35 are disposed to adjoin each other in this order from the radially inner side. The term "adjoin" refers to a state in which no portion other than the material of the support case 60 is interposed.

The cooling water passage 95 is connected to the inlet water passage 942 and the outlet water passage 944. Specifically, an upstream end portion of the cooling water passage 95 is connected to the inlet water passage 942, and a downstream end portion of the cooling water passage 95 is connected to the outlet water passage 944. The inlet water passage 942 and the outlet water passage 944 may be formed to project toward the radially outer side of the support case 60 (upper side in the up-down direction) as illustrated in FIG. 1. The core 795A illustrated in FIG. 4 has the circular column portions 942A and 944A for forming the inlet water passage 942 and the outlet water passage 944.

The cooling water passage 95 extends in the circumferential direction in the range of extension of the stator core 112 in the axial direction. In the present embodiment, for example, the cooling water passage 95 is formed by a large number of the projecting and receding portions 1951A and 1951B (portions that project and recede in the radial direction) (see FIGS. 3 and 4). More specifically, the radially inner side of the cooling water passage 95 is defined by the radially inner wall surface portion 651, the radially outer side of the cooling water passage 95 is defined by the boundary wall surface portion 652, and both end portions of the cooling water passage 95 in the axial direction are closed by the both end wall portions 660. An annular space formed in this manner (an annular space that extends in the axial direction over the substantially entire length of the support case 60 in the axial direction) is defined, on the radially inner side, by the large number of projecting and receding portions 1951A formed by the radially outer surface of the radially inner wall surface portion 651, and is defined, on the radially outer side, by the large number of projecting and receding portions 1951B formed by the radially inner surface of the boundary wall surface portion 652. The large number of projecting and receding portions 1951A and 1951B function to allow cooling water to flow without stagnation over the entire radially outer surface of the stator core 112 while constituting a resistance to the flow. The large number of projecting and receding portions 1951A and 1951B may be disposed while being distributed substantially uniformly in the annular space. The large number of projecting and receding portions 1951A and 1951B have a function of efficiently increasing the surface area of the cooling water passage 95 (the surface area of contact with cooling water) compared to a smooth surface without the projecting and receding portions 1951A and 1951B. One end of the cooling water passage 95 in the axial direction is connected to the inlet water passage 942. The other end of the cooling water passage 95 in the axial direction is connected to the outlet water passage 944.

The core 795A illustrated in FIG. 4 includes the groove portion 957A in the axial direction for forming a partition wall (not illustrated) in the axial direction in the top region of the support case 60 as discussed above. The groove portion 957A penetrates the core 795A in the radial direction. The cooling water passage 95 has a partition wall corresponding to the groove portion 957A, and can prevent a flow of cooling water that flows straight from the inlet water passage 942 to the outlet water passage 944. That is, it is necessary for cooling water introduced from the inlet water passage 942 to flow in the axial direction while circulating on the radially outer side of the stator core 112, in order to reach the outlet water passage 944. Thus, the stator core 112 can be cooled effectively compared to a case where the cooling water flows straight from the inlet water passage 942 to the outlet water passage 944.

The case oil passage 35 extends in the circumferential direction in the range of extension of the stator core 112 in the axial direction. In the present embodiment, for example, the case oil passage 35 is formed by a large number of projecting and receding portions 1351A and 1351B (portions that project and recede in the radial direction) (see FIG. 3). More specifically, the radially inner side of the case oil passage 35 is defined by the boundary wall surface portion 652, the radially outer side of the case oil passage 35 is defined by the radially outer wall surface portion 653, and both end portions of the case oil passage 35 in the axial direction are closed by the both end wall portions 660. An annular space formed in this manner (an annular space that extends in the axial direction over the substantially entire length of the support case 60 in the axial direction) is defined, on the radially inner side, by the large number of projecting and receding portions 1351B formed by the radially outer surface of the boundary wall surface portion 652, and is defined, on the radially outer side, by the large number of projecting and receding portions 1351A formed by the radially inner surface of the radially outer wall surface portion 653. The large number of projecting and receding portions 1351A and 1351B may be disposed while being distributed substantially uniformly in the annular space. The large number of projecting and receding portions 1351Aand 1351B have a function of efficiently increasing the surface area of the case oil passage 35 (the surface area of contact with oil) compared to a smooth surface without the projecting and receding portions 1351A and 1351B.

In the present embodiment, for example, the case oil passage 35 includes a first oil passage portion 351 on one side in the axial direction and a second oil passage portion 352 on the other side in the axial direction as illustrated in FIG. 3. The first oil passage portion 351 and the second oil passage portion 352 are independent oil passage portions that do not communicate with each other except for the side upstream of inlet oil passages 330 and 331. The inlet oil passages 330 and 331 may be formed to project toward the radially outer side (lower side in the up-down direction) from the support case 60 as illustrated in FIG. 1.

The first oil passage portion 351 extends in the circumferential direction on one side (X1 side in the present example) of the range of extension of the stator core 112 in the axial direction. The first oil passage portion 351 is formed in a cylindrical shape about the central axis I (in the shape of a cylinder including the projecting and receding portions 1351A and 1351B in the radial direction as discussed above). One end of the first oil passage portion 351 communicates with the inlet oil passage 330, and the other end of the first oil passage portion 351 opens at an oil drip portion (not illustrated).

The second oil passage portion 352 extends in the circumferential direction on the other side (X2 side in the present example) of the range of extension of the stator core 112 in the axial direction. The second oil passage portion 352 is formed in a cylindrical shape about the central axis I (in the shape of a cylinder including the projecting and receding portions 1351A and 1351B in the radial direction as discussed above). One end of the second oil passage portion 352 communicates with the inlet oil passage 331, and the other end of the second oil passage portion 352 opens at an oil drip portion (not illustrated).

In the present embodiment, for example, the first oil passage portion 351 and the second oil passage portion 352 are formed to be symmetrical and separated from each other near the center of the range of extension of the stator core 112 in the axial direction. Consequently, it is easy to cool the stator core 112 more uniformly using oil that passes through the first oil passage portion 351 and the second oil passage portion 352 while dividing the case oil passage 35 in the axial direction. In a modification, however, the first oil passage portion 351 and the second oil passage portion 352 may be formed to be asymmetric across the center of the range of extension of the stator core 112 in the axial direction, or the first oil passage portion 351 and the second oil passage portion 352 may be formed to communicate (be continuous) with each other as with the cooling water passage 95.

The flow of cooling water and oil in the cooling water passage 95 and the case oil passage 35 discussed above will be described briefly.

Cooling water supplied to the inlet water passage 942 (see the arrow R1 in FIG. 1) enters the cooling water passage 95, flows from the X1 side toward the X2 side while circulating around the central axis I on the radially outer side of the stator core 112 through the cooling water passage 95, and exits from the outlet water passage 944 (see the arrow R3 in FIG. 1).

Oil supplied to the inlet oil passages 330 and 331 (see the arrows R10 in FIG. 1) is supplied to the first oil passage portion 351 and the second oil passage portion 352 of the case oil passage 35. Oil supplied to the first oil passage portion 351 flows toward the X1 side while circulating around the central axis I, reaches the top region at an end portion on the X1 side, and is dripped from the oil drip portion (not illustrated) to the coil end 220A on the X1 side (not illustrated). Likewise, oil supplied to the second oil passage portion 352 flows toward the X2 side while circulating around the central axis I, reaches the top region at an end portion on the X2 side, and is dripped from the oil drip portion (not illustrated) to the coil end 220B on the X2 side (not illustrated).

In the example illustrated in FIGS. 1 to 4, the support case 60 in which the cooling water passage 95 is formed contacts the stator core 112, and thus only the radially inner wall surface portion 651 of the support case 60 is present between cooling water and the stator core 112. The temperature of the cooling water is lower than that of the oil because the cooling water is cooled through heat exchange with outside air (e.g., air that passes during travel of a vehicle) in a radiator (not illustrated) and the oil is cooled through heat exchange with the cooling water in the cooling water passage 95. Thus, the stator core 112 can be cooled efficiently by the cooling water compared to a case where another medium or member such as oil is interposed between the cooling water and the stator core 112.

In the example illustrated in FIGS. 1 to 4, as discussed above, the cooling water passage 95 extends over the entire stator core 112 in the axial direction on the radially outer side of the stator core 112, and extends over the entire stator core 112 in the circumferential direction. Thus, the entire stator core 112 can be deprived of heat.

In the example illustrated in FIGS. 1 to 4, the cooling water passage 95 and the case oil passage 35 are formed in the support case 60, and thus a boundary portion between the cooling water passage 95 and the case oil passage 35 can be formed in the support case 60. That is, the case oil passage 35 is formed in the support case 60 in which the cooling water passage 95 is formed, and thus only the boundary wall surface portion 652 of the support case 60 is present between cooling water and oil in the radial direction. Thus, oil can be cooled efficiently by cooling water compared to a case where another member is interposed between cooling water and oil, for example. Thus, in the example illustrated in FIGS. 1 to 4, an oil cooler is not required even in the motor 10 with a relatively high output.

In the example illustrated in FIGS. 1 to 4, as discussed above, the cooling water passage 95 and the case oil passage 35 are formed inside the support case 60 that is a single-piece member. Thus, it is possible to reduce the number of components compared to a configuration in which a support case such as the support case 60 is formed by coupling two or more members, and to achieve a simple configuration because a structure for such coupling (e.g., a bolt fastening structure) is not required.

In the example illustrated in FIGS. 1 to 4, oil in the case oil passage 35 may be circulated at all times during operation of the motor 10, or may be circulated only for a part of the period during operation of the motor 10. For example, oil in the case oil passage 35 is mainly used to cool the coil ends 220A and 220B as discussed above, and thus may be circulated only for a period for which the coil ends 220A and 220B generate a relatively large amount of heat.

While the motor 10 having the specific structure is illustrated in FIGS. 1 to 4, the motor 10 may have any structure as long as the motor 10 includes the support case 60 formed by using the core such as the core 795A illustrated in FIG. 4. Thus, the support case 60 need not have one or both of the cooling water passage 95 and the case oil passage 35. When the support case 60 does not have the cooling water passage 95 or the case oil passage 35, the support case 60 may have a solid structure. While the specific cooling method is disclosed in FIGS. 1 to 4, the motor 10 may be cooled by any method. Thus, the cooling water passage 95 and the case oil passage 35 may be formed such that cooling water and oil are circulated spirally about the central axis I, for example. The support case 60 may be coupled to the radially outer side of the stator core 112 by shrink fitting, press fitting, etc.

Next, the configuration of the cooling water passage 95 formed by the core 795A as discussed above will be described together with the configuration of the core 795A. The cooling water passage 95 will be described using the configuration of the core 795A for forming the cooling water passage 95. This is because the configuration of the cooling water passage 95 that can be formed by the core 795A is uniquely determined when the configuration of the core 795A is determined. In other words, the diagram of the core 795A represents the outer surface (outline) of the cooling water passage 95. Therefore, the configuration of the core 795A and the configuration of the cooling water passage 95 may be described below without particular distinction.

As illustrated in FIG. 4, axial channel portions 951 and 952 of the cooling water passage 95 (core 795A) that are connected to the inlet water passage 942 and the outlet water passage 944 function as buffer regions for appropriately adjusting the flow of cooling water between the other channel portions (circumferential channel portions) and each of the inlet water passage 942 and the outlet water passage 944. The configurations of the channel portions (circumferential channel portions) of the cooling water passage 95 (core 795A) other than the channel portions 951 and 952 will be described below unless otherwise specified. Portions forming the channel portions 951 and 952 in the core 795A may be molded separately from portions forming the channel portions (circumferential channel portions) other than the channel portions 951 and 952.

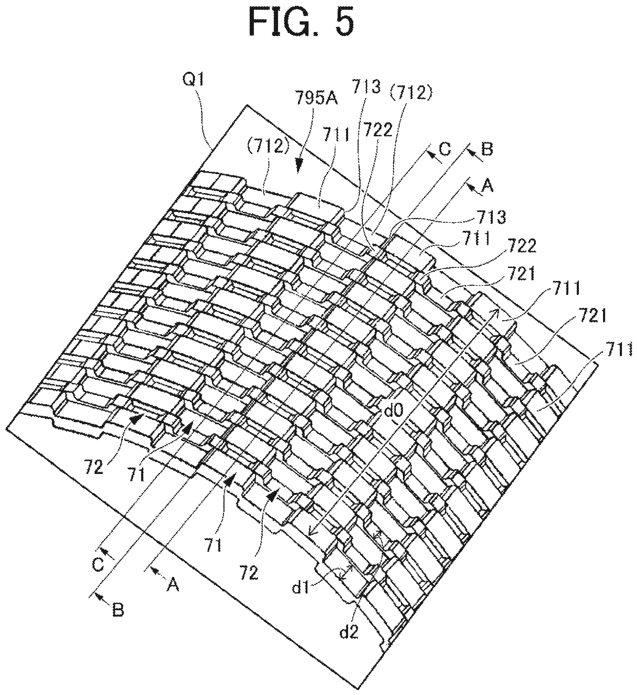

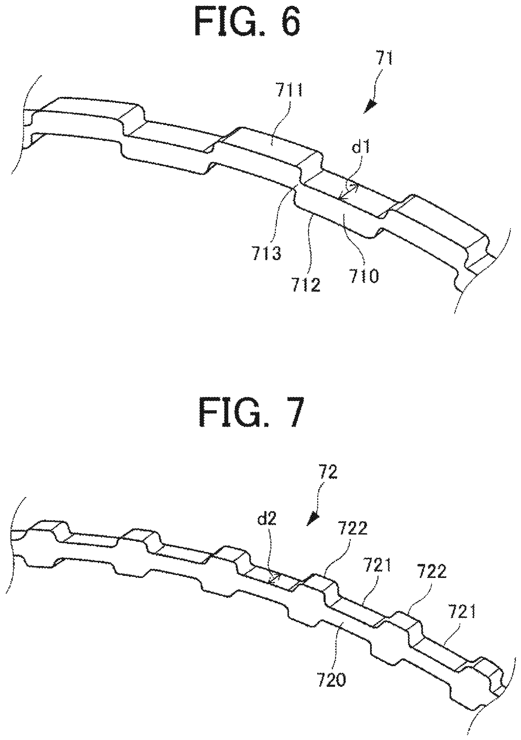

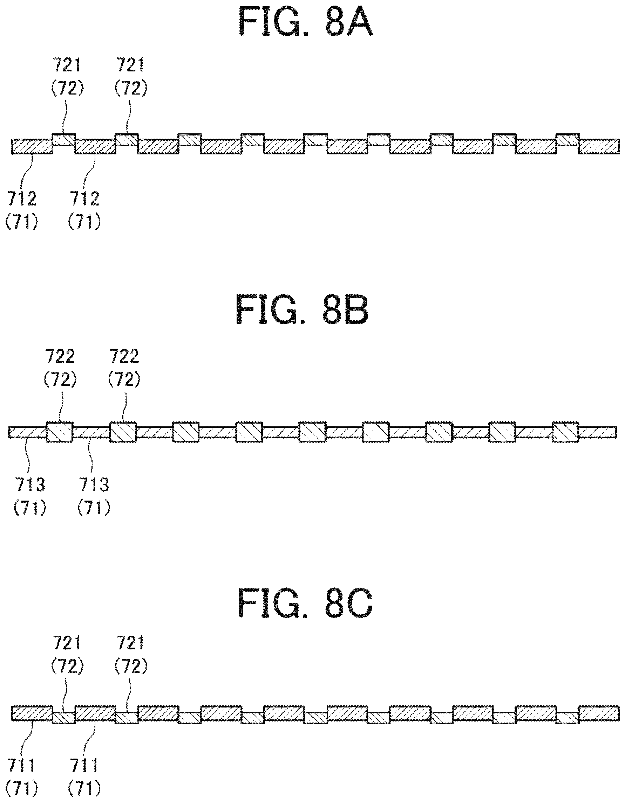

FIG. 5 is an enlarged view of a portion Q1 of the core 795A of FIG. 4. FIG. 6 is a perspective view of a part of a first collapsible core 71 alone. FIG. 7 is a perspective view of a part of a second collapsible core 72 alone. FIG. 8A is a sectional view taken along a line A-A of FIG. 5. FIG. 8B is a sectional view taken along a line B-B of FIG. 5. FIG. 8C is a sectional view taken along a line C-C of FIG. 5. In the following, the term "sectional area" refers to a sectional area of a cross section cut along a plane including the central axis I unless otherwise specified. Although the core 795A for the cooling water passage 95 will be described below, the same applies to the core for the case oil passage 35.

The core 795A includes sets of the first collapsible core 71 and the second collapsible core 72. In the example illustrated in FIG. 5, a total of ten first collapsible cores 71 and a total of nine second collapsible cores 72 are alternately and concentrically stacked one by one along the direction of the central axis I. In this case, the first collapsible cores 71 are disposed at both ends in the axial direction. In a modification, the first collapsible cores 71 and the second collapsible cores 72 may alternately be stacked two by two along the direction of the central axis I. Any number of cores may be continuous in the axial direction. Another modification may be such that two first collapsible cores 71 are one set, three second collapsible cores 72 are one set, and the sets are alternately stacked one by one along the direction of the central axis I. In this case, one or more cores are included in each set as desired.

The first collapsible core 71 and the second collapsible core 72 are stacked in a relationship in which their axial side surfaces (see a side surface 710 of the first collapsible core 71 of FIG. 6 and a side surface 720 of the second collapsible core 72 of FIG. 7) abut against each other in the axial direction (axially adjacent relationship). That is, the first collapsible core 71 and the second collapsible core 72 are stacked without an axial gap over the entire part in the circumferential direction. Therefore, the cooling water passage 95 is not defined by a contact portion (axial boundary line) between the side surface 710 of the first collapsible core 71 and the side surface 720 of the second collapsible core 72 in FIG. 4.

Hereinafter, the core 795A refers to the whole stack of the first collapsible cores 71 and the second collapsible cores 72 (stacked body). The core 795A corresponds to a state immediately before a casting step in a die in a manufacturing process to be discussed later.

The first collapsible core 71 and the second collapsible core 72 are collapsible cores. The collapsible core refers to a type of core that can be removed by "collapse" after the casting step. Examples of the collapsible core include a salt core and a shell core (sand). Compared to the shell core, the salt core is resistant to heat and has a few casting constraints. Therefore, in the present embodiment, the first collapsible core 71 and the second collapsible core 72 are preferably the salt cores.

The first collapsible core 71 and the second collapsible core 72 are in cylindrical forms. As illustrated in FIG. 4, however, the first collapsible core 71 and the second collapsible core 72 are discontinuous in the circumferential direction at parts corresponding to the groove portion 957A. The first collapsible core 71 and the second collapsible core 72 have substantially the same bore diameter and substantially the same outside diameter. The term "substantially the same" means that the values are not strictly the same due to the projecting portions 711 and 712 and the projecting portions 722 to be discussed later.

An axial width d1 of the first collapsible core 71 is constant and significantly smaller than an axial width d0 of the core 795A (see FIG. 5). For example, in the example illustrated in FIG. 5, the axial width d1 of one first collapsible core 71 is smaller than 1/10 of the axial width d0 of the core 795A.

An axial width d2 of the second collapsible core 72 is constant and significantly smaller than the axial width d0 of the core 795A (see FIG. 5). For example, in the example illustrated in FIG. 5, the axial width d2 of one second collapsible core 72 is smaller than 1/10 of the axial width d0 of the core 795A. The axial width d2 of the second collapsible core 72 may be equal to the axial width d1 of the first collapsible core 71, or may be slightly smaller than the axial width d1 as illustrated in FIG. 5. Alternatively, the axial width d2 of the second collapsible core 72 may be slightly larger than the axial width d1 of the first collapsible core 71.

As the axial width d1 and the axial width d2 decrease, it is easier to efficiently increase the surface area of the cooling water passage 95. Therefore, the axial width d1 and the axial width d2 may be minimized within a range in which the easiness of assembling into the core 795A (stacked body) does not significantly decrease.

The first collapsible core 71 has radial projections and recesses. Specifically, the first collapsible core 71 has the radially outward projecting portions 711 periodically along the circumferential direction, and the radially inward projecting portions 712 periodically along the circumferential direction. The projecting portion 711 is a portion in which the radially outer surface projects radially outward (the diameter increases) compared to a circumferentially adjacent portion (projecting portion 712). The projecting portion 712 is a portion in which the radially inner surface projects radially inward (the diameter decreases) compared to a circumferentially adjacent portion (projecting portion 711). The first collapsible core 71 has a transition portion 713 between the projecting portion 711 and the projecting portion 712 in the circumferential direction. Thus, the first collapsible core 71 is continuous such that the projecting portion 711 and the projecting portion 712 alternate each other along the circumferential direction via the transition portion 713.

The sectional area of the projecting portion 711 is equal to the sectional area of the projecting portion 712, and the projecting portion 711 and the projecting portion 712 have a relationship of being offset from each other in the radial direction. The sectional area of the transition portion 713 is significantly smaller than the sectional area of the projecting portion 711. Thus, the channel portion of the cooling water passage 95 that is formed by the first collapsible core 71 meanders between the radially inner side and the radially outer side while the section having a relatively large sectional area and the section having a relatively small sectional area repeatedly alternate each other along the circumferential direction. In a modification, however, only one of the projecting portion 711 and the projecting portion 712 may be formed.

In the present embodiment, for example, the circumferential length of the projecting portion 711 is equal to the circumferential length of the projecting portion 712, but may be different from the circumferential length of the projecting portion 712. The circumferential length of the transition portion 713 is significantly smaller than the circumferential length of the projecting portion 711, but may be equal to or larger than the circumferential length of the projecting portion 711.

The second collapsible core 72 has radial projections and recesses. Specifically, the second collapsible core 72 has base portions 721 periodically along the circumferential direction, and the projecting portions 722 (an example of a second projecting portion) projecting toward both sides in the radial direction and disposed periodically along the circumferential direction. The projecting portion 722 is a portion in which the radial surfaces project toward both sides in the radial direction compared to a circumferentially adjacent portion (base portion 721). Thus, the second collapsible core 72 is continuous such that the base portion 721 and the projecting portion 722 alternate each other along the circumferential direction. In a modification, the projecting portion 722 may be formed to project toward one side in the radial direction as in the case of the projecting portion 711 and the projecting portion 712.

The sectional area of the projecting portion 722 is significantly larger than that of the base portion 721. Thus, the channel portion of the cooling water passage 95 that is formed by the second collapsible core 72 repeats alternation of the section having a relatively large sectional area and the section having a relatively small sectional area along the circumferential direction.

In the present embodiment, for example, the circumferential length of the base portion 721 is slightly larger than the circumferential length of the projecting portion 722, but may be equal to or smaller than the circumferential length of the projecting portion 722.

The circumferential pitch of the projecting portions 722 is preferably equal to the circumferential pitch of the transition portions 713 of the first collapsible core 71 discussed above. In this case, it is possible, as discussed later, to form the core 795A such that the circumferential position of each transition portion 713 of the first collapsible core 71 agrees with the circumferential position of each projecting portion 722 of the second collapsible core 72. That is, it is possible to form the core 795A such that each transition portion 713 of the first collapsible core 71 and each projecting portion 722 of the second collapsible core 72 adjoin each other in the axial direction.

In the present embodiment, the first collapsible cores 71 and the second collapsible cores 72 of the core 795A are stacked, as illustrated in FIG. 5, in a relationship in which the circumferential positions of the projecting portions 711 and the projecting portions 722 are different and the circumferential positions of the projecting portions 712 and the projecting portions 722 are different. That is, the first collapsible cores 71 and the second collapsible cores 72 are stacked, as illustrated in FIG. 5, such that the circumferential positions of the transition portions 713 of the first collapsible cores 71 agree with the circumferential positions of the projecting portions 722 of the second collapsible cores 72. Thus, the sectional area of the core 795A can be made uniform along the circumferential direction. That is, assuming in the state of the core 795A (stacked body) that the sectional area of the core 795A is S0, the sectional area of the first collapsible cores 71 is S1, and the sectional area of the second collapsible cores 72 is S2, the sectional area S0 of the core 795A (= S1 + S2) can be made uniform along the circumferential direction. Specifically, the sectional area S1 of the first collapsible cores 71 is a relatively large value S11 at the circumferential positions of the projecting portions 711 or the projecting portions 712, and is a relatively small value S12 at the circumferential positions of the transition portions 713. The sectional area S2 of the second collapsible cores 72 is a relatively small value S21 at the circumferential positions of the base portions 721, and is a relatively large value S22 at the circumferential positions of the projecting portions 722. In this case, the sectional area S0 at the circumferential positions of the projecting portions 711 or the projecting portions 712 (see FIGS. 8A and 8C) is S0 = S11 + S21, and the sectional area S0 at the circumferential positions of the transition portions 713 (see FIG. 8B) is S0 = S12 + S22. Since the difference between S0 = S11 + S21 and S0 = S12 + S22 can be made relatively small, the sectional area S0 of the core 795A (= S1 + S2) can be made uniform along the circumferential direction.

The projecting portions 711 and 712 of the first collapsible cores 71 and the projecting portions 722 of the second collapsible cores 72 are components for forming the projecting and receding portions 1951Aand 1951B of the cooling water passage 95 discussed above. The projecting and receding portions 1951A and 1951B have the function of efficiently increasing the surface area of the cooling water passage 95 (the surface area of contact with cooling water). The projecting and receding portions 1951A and 1951B also have a function of regulating the flow of cooling water because the projecting and receding portions 1951A and 1951B serve as resistance to the flow of cooling water in the cooling water passage 95.

If the sectional area of the cooling water passage 95 significantly varies along the circumferential direction due to the projecting and receding portions 1951A and 1951B, however, a significant pressure loss is likely to occur in the flow of cooling water. Therefore, it is difficult to cause the cooling water to flow along the circumferential direction as desired.

According to the present embodiment, the sectional area S0 of the core 795A (= S1 + S2) is made uniform along the circumferential direction as discussed above. Thus, it is possible to prevent the significant variation in the sectional area of the cooling water passage 95 along the circumferential direction due to the projecting and receding portions 1951A and 1951B. Consequently, it is easy to cause the cooling water to flow along the circumferential direction as desired, and it is possible to efficiently increase the cooling effect of the cooling water discussed above.

From this point of view, the sectional area S0 of the core 795A (= the sectional area of the cooling water passage 95) is preferably substantially constant along the circumferential direction in a section corresponding to a half perimeter (180 degrees) or more in the circumferential direction (e.g., the entire section excluding the sections related to the channel portions 951 and 952). The concept "substantially constant" may allow a deviation within 10%. Thus, it is possible to more securely prevent the significant variation in the sectional area of the cooling water passage 95 along the circumferential direction due to the projecting and receding portions 1951A and 1951B. As a result, it is possible to efficiently increase the cooling effect of the cooling water discussed above.

According to the present embodiment, the core 795A is formed by stacking the plurality of first collapsible cores 71 and the plurality of second collapsible cores 72. Compared to a case of integral molding, the individual moldability is improved because the plurality of first collapsible cores 71 and the plurality of second collapsible cores 72 can be molded individually. In other words, it is possible to increase the degree of freedom in terms of the shapes of the first collapsible core 71 and the second collapsible core 72. As a result, it is possible to obtain the support case 60 capable of increasing the cooling effect as discussed above.

In the present embodiment, for example, cooling water flowing in the circumferential direction along the channel portion related to the first collapsible core 71 partially flows in the axial direction to the channel portion related to the second collapsible core 72 adj acent in the axial direction due to the decrease in the sectional area at the transition portion 713 between the projecting portions 711 and 712. Such a flow in the axial direction is promoted by an increase in the sectional area at the projecting portion 722 in the channel portion related to the second collapsible core 72 (the projecting portion 722 adjacent to the transition portion 713 in the axial direction). Likewise, cooling water flowing in the circumferential direction along the channel portion related to the second collapsible core 72 partially flows in the axial direction to the channel portion related to the first collapsible core 71 adjacent in the axial direction due to the decrease in the sectional area caused by transition from the projecting portion 722 to the base portion 721. Such a flow in the axial direction is promoted by an increase in the sectional area at the projecting portion 711 or 712 in the channel portion related to the first collapsible core 71 (the projecting portion 711 or 712 adjacent to the base portion 721 in the axial direction). Thus, in the present embodiment, the cooling water flows in the axial direction between the channel portion related to the first collapsible core 71 and the channel portion related to the second collapsible core 72. When viewed in the axial direction, the cooling water flowing along, for example, the channel portion related to the first collapsible core 71 flows between the radially inner and outer sides by the projecting portions 711 and 712. Therefore, according to the present embodiment, the cooling water is mixed appropriately. Thus, it is possible to reduce the temperature difference between the cooling water flowing along the channel portion related to the first collapsible core 71 and the cooling water flowing along the channel portion related to the second collapsible core 72. Thus, the cooling performance of the cooling water can be made uniform (uniform along the axial direction).

According to the present embodiment, the first collapsible core 71 and the second collapsible core 72 have the projecting portions 711, 712, and 722, etc. as described above, but do not have holes (cavities) penetrating in the radial direction (thickness direction). In a case where a salt core to be molded by applying pressure has holes in the radial direction, the molding is difficult. In this case, for example, when forming a salt core having N holes arranged in the axial direction, there is a strong need to mold the salt core by dividing the salt core into N parts in the axial direction. In this respect, according to the present embodiment, the moldability is better than that in the case with the holes penetrating in the radial direction. Thus, it is possible to efficiently reduce the number of pieces for forming the core 795A (the total number of the first collapsible cores 71 and the second collapsible cores 72).

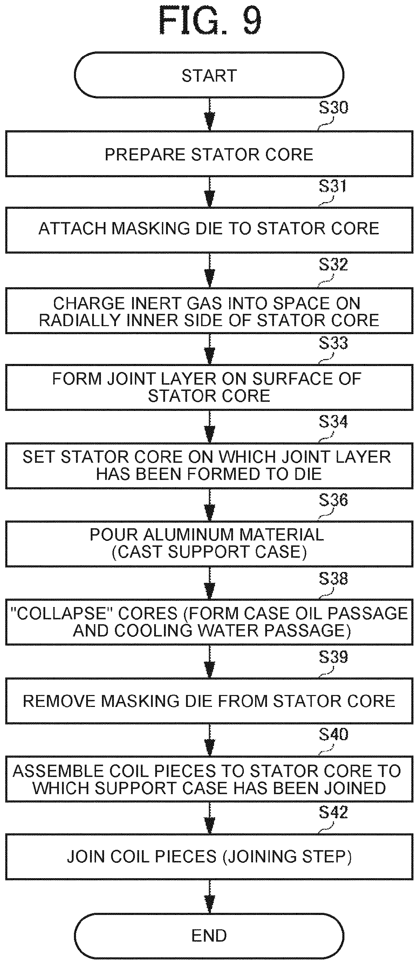

Next, preferred examples of a manufacturing method of the stator core 112 using the core 795A discussed above will be described with reference to FIG. 9 and other subsequent figures.

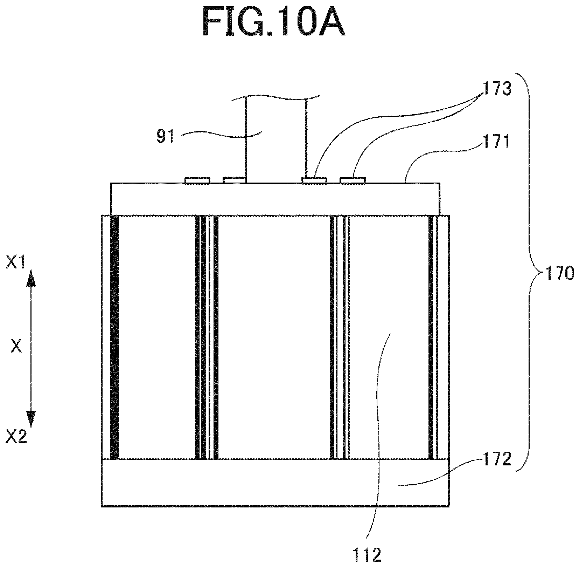

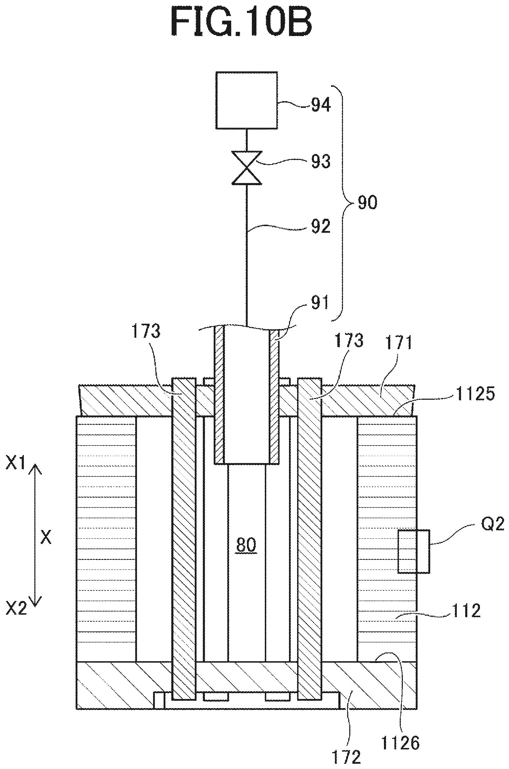

FIG. 9 is a schematic flowchart illustrating the flow of a manufacturing method of the stator 10b. FIGS. 10A to 10D illustrate the manufacturing method illustrated in FIG. 9. Specifically, FIGS. 10A and 10B illustrate a masking die 170. FIG. 10A is a front view schematically illustrating an example of the stator core 112 in a state in which the masking die 170 is set. FIG. 10B is a sectional view thereof. While the X direction defined in FIG. 3 is illustrated in FIGS. 10A and 10B, the X1 side and the X2 side may be reversed. FIG. 10C illustrates a method for joining the support case 60 and the stator core 112, and is an enlarged view of the stator core 112 (an enlarged view of a portion Q2 in FIG. 10B) in which a joint layer 61 has been formed. FIG. 10D is a sectional view schematically illustrating a state in which the core 795A etc. have been set.

The manufacturing method of the stator 10b firstly includes a preparation step for preparing a stator core 112 (step S30). The stator core 112 is made of stacked magnetic steel sheets in an annular shape, for example. In this case, the steel sheets need not be joined to each other, or may be joined to each other by welding etc.

The manufacturing method of the stator 10b then includes setting the masking die 170 to the stator core 112 (step S31). The masking die 170 has a function of protecting both end surfaces of the stator core 112 in the axial direction and the radially inner surface of the stator core 112 (a surface on the side on which a rotor core is housed), as discussed later. This function will be discussed later in association with steps S33 and S36.

In the example illustrated in FIGS. 10A and 10B, for example, the masking die 170 includes an upper masking member 171, a lower masking member 172, and fastening bolts 173.

The upper masking member 171 covers an end surface 1125 of the stator core 112 on the X1 side, and closes a space 80 (see FIG. 10B) in the stator core 112 in which the rotor core (not illustrated) is to be housed from the X1 side in the axial direction. The lower masking member 172 covers an end surface 1126 of the stator core 112 on the X2 side, and closes the space 80 (see FIG. 10B) in the stator core 112 in which the rotor core (not illustrated) is to be housed from the X2 side in the axial direction. The fastening bolts 173 generate a force in the axial direction (axial force) between the upper masking member 171 and the lower masking member 172. Specifically, when the fastening bolts 173 are fastened, a force in the axial direction is generated between the upper masking member 171 and the lower masking member 172, which secures abutment (abutment in the axial direction) between the upper masking member 171 and the end surface 1125 of the stator core 112 on the X1 side and secures abutment (abutment in the axial direction) between the lower masking member 172 and the end surface 1126 of the stator core 112 on the X2 side.

A tubular member 91 is airtightly connected to the upper masking member 171. The tubular member 91 may be formed integrally with the upper masking member 171. The tubular member 91 forms an inert gas charging device 90 to be discussed later. As schematically illustrated in FIG. 10B, one end of the tubular member 91 extends into the space 80, and the other end of the tubular member 91 is connected to an inert gas supply path 92. The inert gas supply path 92 may be removably connected to the tubular member 91, or may be integrally connected to the tubular member 91.

The manufacturing method of the stator 10b then includes charging an inert gas into the space 80 of the stator core 112 (step S32). FIG. 10B schematically illustrates the inert gas charging device 90 that charges the inert gas into the space 80. In the example illustrated in FIG. 10B, the inert gas charging device 90 includes the tubular member 91, the inert gas supply path 92, a valve 93, and an inert gas supply source 94. In this case, the inert gas from the inert gas supply source 94 is charged into the space 80 via the inert gas supply path 92 and the tubular member 91. The valve 93 may be a pressure reducing valve (pressure valve) that can reduce the pressure in the space 80. Consequently, the pressure in the space 80 can be kept appropriately even when the inert gas in the space 80 is expanded because of a temperature rise in step S33 or S36 to be discussed later.

The manufacturing method of the stator 10b then includes forming a joint layer 61 (see FIG. 10C) on a surface (radially outer surface) of the stator core 112 (step S33). FIG. 10C is an enlarged view of the portion Q2 in FIG. 10B after the joint layer 61 has been formed. The joint layer 61 is a layer that facilitates the joint of a material containing aluminum as a main component to be introduced in the next step to the surface of the stator core 112. The joint layer 61 is an alloy layer of iron and aluminum. The alloy layer of iron and aluminum can be formed by performing an aluminizing process, for example. The aluminizing process may be implemented by sequentially immersing the stator core 112 in a bath such as an aluminum bath (e.g., a molten aluminum bath). In the aluminizing process, a part of the surface of the stator core 112 is melted to form an alloy layer of iron and aluminum. Since a part of the surface of the stator core 112 is melted to form the joint layer 61, the joint layer 61 and the stator core 112 are securely integrated with each other.

In the present embodiment, as discussed above, the stator core 112 is immersed in the bath such as an aluminum bath with the masking die 170 attached to the stator core 112. Thus, it is possible to reduce the possibility that molten aluminum etc. adheres to the end surfaces 1125 and 1126 of the stator core 112 or that the molten aluminum etc. enters the space 80.

In the present embodiment, as discussed above, the aluminizing process is achieved with the inert gas charged into the space 80.

When the aluminizing process is achieved with the inert gas charged into the space 80, damage to an insulating film on the steel sheets that form the stator core 112 can be reduced compared to a case where the aluminizing process is not achieved in this manner (i.e., a case where the aluminizing process is achieved with no inert gas charged into the space 80).

Specifically, oxide scales (rust) tend to be generated on the steel sheets that form the stator core 112 when the steel sheets are exposed to an atmosphere containing oxygen at a relatively high temperature (e.g., 600°C or more). When such oxide scales are generated, the insulating film applied to the surface of the steel sheets is broken, and the intended magnetic performance of the stator core 112 may not be obtained. When the aluminizing process is achieved with no inert gas charged into the space 80 (i.e., in an atmosphere containing oxygen), the stator core 112 is exposed to an atmosphere at a high temperature due to the molten aluminum. As a result, the insulating film on the steel sheets of the stator core 112 is broken, and the intended magnetic performance of the stator core 112 may not be obtained.

In this respect, when the aluminizing process is achieved with the inert gas charged into the space 80, generation of oxide scales is prevented or effectively reduced, even if the stator core 112 is exposed to an atmosphere at a high temperature due to the molten aluminum, because the atmosphere does not substantially contain oxygen. As a result, the insulating film on the steel sheets of the stator core 112 can be protected, and it is possible to effectively reduce the possibility that the intended magnetic performance of the stator core 112 cannot be obtained.

The joint layer 61 is preferably formed so as to cover the entire range in which the stator core 112 is joined to the support case 60. Consequently, it is possible to secure the joint between the stator core 112 and the support case 60 over the entire range of the joint between the stator core 112 and the support case 60.

The manufacturing method of the stator 10b then includes setting the stator core 112 on which the joint layer 61 has been formed to a casting die (not illustrated) (step S34). In this event, the stator core 112 is set to the casting die with the masking die 170 discussed above attached to the stator core 112. In this event, a core for forming the case oil passage 35 and a core for forming the cooling water passage 95 (see the core 795A in FIG. 4) discussed above are set to the casting die (stacking step). FIG. 10D schematically illustrates a state in which the core 735A for forming the case oil passage 35 and the core 795A for forming the cooling water passage 95 discussed above are set to the casting die (not illustrated). As schematically illustrated in FIG. 10D, the core 795A is set while being spaced on the radially outer side from the stator core 112 on the radially inner side, and the core 735Ais set while being spaced on the radially outer side from the core 795A. The core 735A is set while being spaced on the radially inner side from the casting die (not illustrated) on the radially outer side. The core 795A (the same applies to the core 735A) is set by concentrically stacking the first collapsible cores 71 and the second collapsible cores 72 discussed above in the axial direction (see FIG. 5). The stacked body formed by concentrically stacking the first collapsible cores 71 and the second collapsible cores 72 in the axial direction may be formed prior to step S34. In this case, this stacked body is disposed (set) in the casting die in step S34.

The manufacturing method of the stator 10b then includes a step of casting a support case 60 (casting step) (step S36) by pouring a material containing aluminum as a main component (hereinafter simply referred to as "aluminum material") in a molten state (i.e., a state of molten metal) into the casting die to which the stator core 112 (the stator core 112 on which the joint layer 61 has been formed) has been set. While the die casting (aluminum gravity casting) method in which casting is performed using only the weight of the molten aluminum material is adopted in the present embodiment, a different casting method may be used.

As discussed above, the joint layer 61 has been formed on the surface of the stator core 112 set to the casting die. Thus, when the molten aluminum material is introduced into the casting die, the aluminum material is integrated with aluminum contained in the joint layer 61. In this manner, the support case 60 can be joined securely to the surface of the stator core 112 via the joint layer 61.

As discussed above, the core 795A is set while being spaced on the radially outer side from the stator core 112 on the radially inner side, and the core 735A is set while being spaced on the radially outer side from the core 795A and set while being spaced on the radially inner side from the casting die (not illustrated) on the radially outer side. Thus, the aluminum material is injected such that the aluminum material fills such gaps in the radial direction. As a result, a portion for the support case 60 is completed.

In the present embodiment, as discussed above, the stator core 112 is set to the casting die with the masking die 170 attached to the stator core 112. Thus, it is possible to reduce the possibility that the aluminum material adheres to the end surfaces 1125 and 1126 of the stator core 112 or that the aluminum material enters the space 80.

In the present embodiment, the casting step of step S36 is executed with the inert gas charged into the space 80, as in the aluminizing process discussed above. When the casting step of step S36 is executed with the inert gas charged into the space 80, damage to the insulating film on the steel sheets that form the stator core 112 can be reduced compared to a case where the casting step is not executed in this manner (i.e., a case where the casting step of step S36 is executed with no inert gas charged into the space 80).

Specifically, when the casting step of step S36 is achieved with no inert gas charged into the space 80 (i.e., in an atmosphere containing oxygen), the radially inner surface of the stator core 112 is exposed to an atmosphere at a high temperature due to the aluminum material at a high temperature. As a result, the insulating film on the steel sheets of the stator core 112 is broken, and the intended magnetic performance of the stator core 112 may not be obtained.

In this respect, when the casting step of step S36 is executed with the inert gas charged into the space 80, generation of oxide scales is prevented or effectively reduced, even if the stator core 112 is exposed to an atmosphere at a high temperature, because the atmosphere does not substantially contain oxygen. As a result, the insulating film on the steel sheets of the stator core 112 can be protected, and it is possible to effectively reduce the possibility that the intended magnetic performance of the stator core 112 cannot be obtained.

Step S32 may be executed again prior to the casting step of step S36. In this case, the casting step of step S36 can be executed with the inert gas reliably charged into the space 80. In a different modification, the inert gas may be charged into the space 80 again after the start or during the execution of the casting step of step S36. For example, a pressure sensor may be provided in the tubular member 91 etc., and supply of the inert gas from the inert gas supply source 94 may be controlled such that the pressure in the space 80 (pressure of the inert gas) is kept at a predetermined value or more during the casting step of step S36.

The manufacturing method of the stator 10b then includes removing, by "collapsing", the cores 735A and 795A (FIG. 10D) for forming the case oil passage 35 and the cooling water passage 95 discussed above (step S38) (an example of a removal step). When the cores 735A and 795A are salt cores, the cores 735A and 795A can be removed by "collapsing" through water injection etc. as discussed above. Consequently, the case oil passage 35 and the cooling water passage 95 discussed above are formed inside the support case 60.

The manufacturing method of the stator 10b then includes removing the masking die 170 discussed above from the stator core 112 (step S39). Step S39 may be executed before step S38 discussed above.

The manufacturing method of the stator 10b then includes assembling coil pieces 52 (not illustrated) to the stator core 112 to which the support case 60 has been joined as discussed above (step S40). In this case, the coil pieces 52 can be assembled easily into slots (not illustrated) of the stator core 112 in the axial direction (or from the radially inner side).

The manufacturing method of the stator 10b then includes a joining step for joining the coil pieces 52 to each other (step S42).

In this manner, with the example illustrated in FIG. 9, the stator 10b in which the stator core 112 and the support case 60 are securely joined to each other can be easily manufactured by forming the joint layer 61 through the aluminizing process. A rotor (not illustrated) is assembled to the radially inner side of the thus manufactured stator 10b to form a motor 10.

In the example illustrated in FIG. 9, the joint layer 61 is formed before the stator core 112 is set to the casting die (not illustrated). However, the joint layer 61 may be formed in the casting die (not illustrated) after the stator core 112 is set to the casting die. Also in this case, the joint layer 61 may be formed with the stator core 112 set into the casting die with the masking die 170 attached to the stator core 112.

In the present embodiment, as discussed above, the aluminizing process and the casting step are executed with the masking die 170 attached to the stator core 112. Thus, it is possible to reduce the possibility that the aluminum material etc. are attached to the end surfaces 1125 and 1126 of the stator core 112 or that the aluminum material etc. reach the space 80 on the radially inner side of the stator core 112 to be attached to the radially inner surface of the stator core 112.

In the present embodiment, as discussed above, the aluminizing process and the casting step are executed with the masking die 170 attached to the stator core 112 and with the inert gas charged into the space 80 of the stator core 112. Thus, it is possible to effectively reduce disadvantages (damage to the insulating film on the steel sheets of the stator core 112) due to the stator core 112 being heated to a high temperature in an atmosphere containing oxygen.

In this manner, with the present embodiment, it is possible to appropriately integrate, on the radially outer side of the stator core 112, the support case 60 made of aluminum that is a non-magnetic material.

In the example illustrated in FIG. 9, the casting step is executed with the cores 735A and 795A set to the casting die. Thus, the cores 735A and 795A are preferably salt cores. This is because the salt cores are more resistant to heat than shell cores (sand) and impose fewer constraints during casting. For example, when the cores 735A and 795A are salt cores, the cores 735A and 795A can be set to the casting die (not illustrated) in a heated state. In this case, the aluminum material injected into the casting die is not significantly deprived of heat by the cores 73 5A and 795A, and thus a high-quality support case 60 can be manufactured.

In the preferable example illustrated in FIG. 9, both the aluminizing process and the casting step are executed with the masking die 170 attached to the stator core 112. However, only one of the aluminizing process and the casting step may be executed with the masking die 170 attached to the stator core 112. Likewise, in the preferable example illustrated in FIG. 9, both the aluminizing process and the casting step are executed with the inert gas charged into the space 80 of the stator core 112. However, only one of the aluminizing process and the casting step may be executed with the inert gas charged into the space 80 of the stator core 112.

In the preferable example illustrated in FIG. 9, the masking die 170 covers the entirety of the end surfaces 1125 and 1126 of the stator core 112. However, the masking die 170 may be configured to cover only a part of the end surfaces 1125 and 1126. The function of the lower masking member 172 may be implemented by the casting die.

While the embodiments have been described in detail above, the present invention is not limited to specific embodiments, and various modifications and changes can be made within the scope of the claims. It is also possible to combine all or some of the constituent elements according to the embodiments discussed earlier.

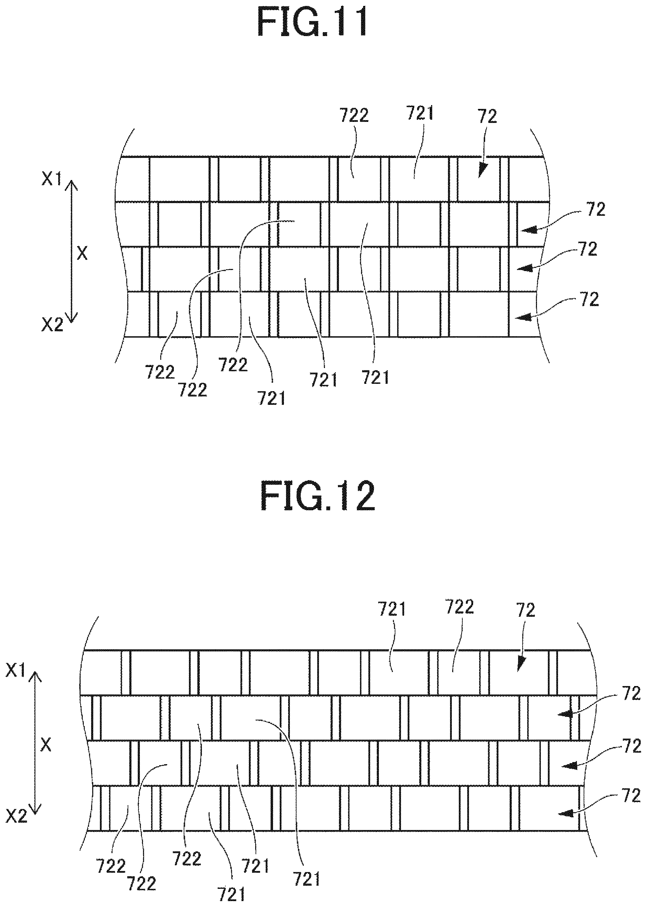

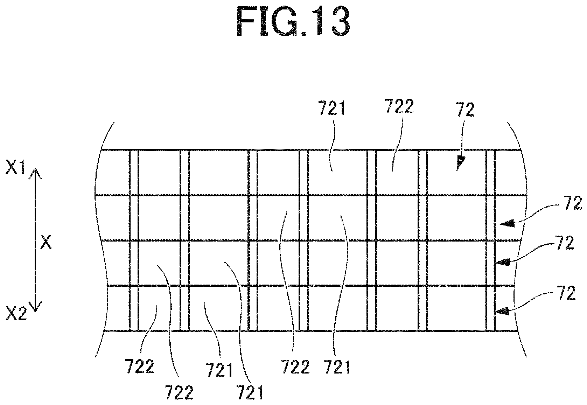

For example, in the embodiment discussed above, the core 735A is formed by using two types of core that are the first collapsible core 71 and the second collapsible core 72, but a core such as the core 735A may be formed by using three or more types of core. Alternatively, the core such as the core 735A may be formed by using one type of core. In both the cases, the plurality of cores can be formed individually as in the embodiment discussed above. Thus, the individual moldability is improved compared to the case of integral molding. In other words, it is possible to increase the degree of freedom in terms of the shapes of the plurality of cores. As a result, it is possible to obtain the support case 60 capable of increasing the cooling effect as discussed above. In the case of using one type of core, for example, only the first collapsible cores 71 may be used. In this case, the first collapsible cores 71 adjoining each other in the axial direction may be disposed in a relationship in which the circumferential positions of the projecting portions 711 and 712 are shifted, or may be disposed in a relationship in which the circumferential positions of the projecting portions 711 and 712 are the same (in-phase relationship). Likewise, only the second collapsible cores 72 may be used, for example, as illustrated in FIGS. 11 to 13 schematically illustrating parts of four second collapsible cores 72 disposed to adjoin each other in the axial direction in plan view. In this case, as illustrated in FIGS. 11 and 12, the second collapsible cores 72 adjoining each other in the axial direction may be disposed in a relationship in which the circumferential positions of the projecting portions 722 are shifted. The circumferential positions of the projecting portions 722 may be shifted as desired among the second collapsible cores 72 adjoining each other in the axial direction. For example, the circumferential positions may be shifted by a half of the circumferential pitch of the projecting portions 722 as illustrated in FIG. 11, or may be shifted by about 1/4 of the circumferential pitch of the projecting portions 722 as illustrated in FIG. 12. Alternatively, as illustrated in FIG. 13, two second collapsible cores 72 adjoining each other in the axial direction may be disposed in a relationship in which the circumferential positions of the projecting portions 722 are the same (in-phase relationship).

In the embodiment discussed above, the support case 60 and the stator core 112 are integrated with each other through joining rather than fastening using bolts, but the present invention is not limited thereto. The support case 60 and the stator core 112 may be integrated with each other by shrink fitting etc.

### Description of the Reference Numerals

10 ... motor (rotary electric machine), 60 ... support case (cooling member), 71 ... first collapsible core, 711, 712 ... projecting portion (first projecting portion), 713 ... transition portion (first portion), 72 ... second collapsible core, 722 ... projecting portion (second projecting portion), 721 ... base portion (second portion)

## Claims

1. A manufacturing method of a cooling member to be used for a rotary electric machine, the method comprising:
a preparation step for preparing a plurality of annular collapsible cores having radial projections and recesses;
a stacking step for concentrically stacking the plurality of collapsible cores along a direction of extension of a rotational axis of the rotary electric machine;
a casting step for pouring a material of the cooling member into a die with the plurality of collapsible cores stacked in the die so that the material covers outer peripheral surfaces and inner peripheral surfaces of the plurality of collapsible cores; and
a removal step for removing the plurality of collapsible cores after the casting step.

2. The manufacturing method according to claim 1, wherein in the stacking step, the plurality of collapsible cores is stacked such that circumferential positions of the radial projections and recesses are different between the collapsible cores adjoining each other in an axial direction.

3. The manufacturing method according to claim 2, wherein:
the plurality of collapsible cores includes first collapsible cores each having a plurality of first projecting portions that form the radial projections and recesses, and second collapsible cores each having an annular shape and having a plurality of second projecting portions that form the radial projections and recesses and have different forms from forms of the plurality of first projecting portions;
the first collapsible cores each include, periodically along a circumferential direction, the plurality of first projecting portions and a plurality of first portions where the first projecting portions are not formed, and a sectional area of the first projecting portion is larger than a sectional area of the first portion in a sectional view cut along a plane including the rotational axis; and
the second collapsible cores each include, periodically along the circumferential direction, the plurality of second projecting portions and a plurality of second portions where the second projecting portions are not formed, and a sectional area of the second projecting portion is larger than a sectional area of the second portion in the sectional view cut along the plane.

4. The manufacturing method according to claim 3, wherein:
the first projecting portions include a radially outward projecting portion adjacent to one side of the first portion in the circumferential direction, and a radially inward projecting portion adjacent to the other side of the first portion in the circumferential direction; and
in the stacking step, the first collapsible cores and the second collapsible cores are stacked so that a circumferential position of the first portion agrees with a circumferential position of the second projecting portion.

5. The manufacturing method according to claim 4, wherein a stacked body formed by stacking the first collapsible cores and the second collapsible cores in the stacking step has a sectional area that is substantially constant along the circumferential direction at least in a section corresponding to a half perimeter or more in the sectional view cut along the plane.
